# EUROPEAN PATENT APPLICATION

(11) **EP 3 656 224 A1**
(43) Date of publication of application: **27.05.2020**
(21) Application number: 18207227.2
(22) Date of filing: 20.11.2018
(51) Int. Cl.: A23K 40/20, A23K 10/30, A23K 20/174, A23K 20/147

(54) **COMPRESSED TABLETS**

(71) Applicant: DSM IP Assets B.V., 6411 TE Heerlen (NL)
(72) Inventor: The designation of the inventor has not yet been filed
(74) Representative: Berg, Katja

(57) **Abstract**

The present invention relates to compressed tablets comprising at least one active and a gluten as well as to the production of such tablets.

## Description

The present invention relates to compressed tablets comprising at least one active and a gluten as well as to the production of such tablets.

Active ingredients are commonly supplemented in the form of tablets to the recipient such as to animals. Examples of particularly interesting active ingredients in the animal nutrition field are vitamins, carotenoids and feed enzymes. Often, these active ingredients are first formulated into a powderous formulation, which is then used for (for example) producing compressed (compacted) tablets or they are used in premixes which are then used for the preparation of further formulations or product forms such as compressed tablets. However, often the actives are released quickly e.g. in the stomach, even though a slower release would be more favourable. Thus, there is an ongoing need in slow release tablets which remain intact over a certain period of time in an aqueous media.

Surprisingly, it has been found that compressed (compacted) tablets comprising at least one active selected from the group consisting of water and/ or fat-soluble vitamins or feed enzymes and a gluten show no disintegration over a long period of time and only slowly release the active into aqueous media and are thus suitable to overcome the above-mentioned problems.

Thus, in a first embodiment the present invention relates to compressed tablets (I) comprising
(i) at least at least one active ingredient selected from the group consisting of water- or fat-soluble vitamins, carotenoids, and feed enzymes as well as mixtures thereof, and
(ii) at least 30 wt-%, based on the total weight of the compressed tablet, of a gluten.

The amount of the at least one active in the compressed tablet according to the present invention can vary is dependent on the type of the active, its potency, the desired dosage regimen of the tablets and the recommended daily intake and can easily be determined by a person skilled in the art based on the intended use. Generally, the amount of the active can range from about 1 ppb to about 50 wt.-%, such as in the range of 1 ppb to 20 wt.-%, based on the total weight of the compressed tablet.

The at least one active ingredient can be incorporated into the tablet as such or in the form of a liquid or powderous formulation.

The term 'liquid formulation' refers to liquid actives as well as any solution or dispersion of an active ingredient in a suitable liquid media such as in water or an edible oil.

The term 'powderous formulation' refers to any solid product form, i.e. in the form of particles including actives which are solid. Such powderous formulations are well known to a person skilled in the art and encompass inter alia active ingredients which are adsorbed on a carrier, incorporated into premixes as well as active ingredients entrapped in a core without being limited thereto.

The term 'edible oil' refers to oils commonly used in human or feed applications. Preferred edible oils in all embodiments of the present invention are propyleneglycol, corn oil, rapeseed oil, sunflower oil, middle chain triglyceride (MCT) and glycerol as well as mixtures thereof.

Thus, in a second embodiment, the present invention relates to compressed tablets (II), which are compressed tablets (I), wherein the at least one active is incorporated in the form of a liquid or powderous formulation.

In a preferred embodiment, the active ingredient is incorporated into the tablet in the form of a powderous formulation. Thus, the invention relates preferably to compressed tablets (III), which are compressed tablets (I), wherein the at least one active is incorporated in the form of a powderous formulation.

Particular suitable active ingredients according to the present invention are fat-soluble vitamins, such a vitamin A, D, E, and K (as well as derivatives thereof); water-soluble vitamins such as B-vitamins and vitamin C; and carotenoids such as a-carotene, β-carotene, 8'-apo-carotenal, 8'-apo-carotenoic acid esters, canthaxanthin, astaxanthin, lycopene, lutein, zeaxanthin and crocetin.

Particularly suitable vitamins encompass fat-soluble vitamins such as vitamin A, vitamin D3, Hy-D (i.e. 25-hydroxyvitamin D3), vitamin E, and vitamin K, e.g. vitamin K3 as well as water-soluble vitamins such as vitamin B12, biotin and choline, vitamin B1, vitamin B2, vitamin B6, niacin, folic acid and panthothenate, e.g. Ca-D-panthothenate.

The tablet may further comprise minerals suitable for feed application such as trace minerals e.g. manganese, zinc, iron, copper, iodine, selenium, and cobalt as well as macro minerals e.g. calcium, phosphorus and sodium. If present, the total amount of mineral(s) in the tablets according to the present invention is advantageously selected in the range of 0.01 to 30 wt.-%, preferably in the range of 0.05 to 20 wt.-%, most preferably in the range of 0.1 to 10 wt.-%.

In all embodiments of the present invention the active ingredient is preferably selected from the group of fat soluble vitamins and water soluble vitamins as well as mixtures thereof, more preferably from Vitamin A, Vitamin D3, Hy-D, Vitamin E, Vitamin K, Vitamin B12, biotin, choline, Vitamin B1, Vitamin B2, Vitamin B6, niacin, folic acid, panthothenate as well as mixtures thereof, most preferably from Hy-D and Vitamin B6.

The amount of the active ingredient in the liquid or powderous formulation, which are used in the preparation of compressed tablets according to the present invention can vary. In case of a powderous active it can be up to 100 wt.-%. In case of a liquid active ingredient the active ingredient is preferably transferred into a powderous formulation by standard techniques in the art before being used in the preparation of the tablets according to the present invention.

Preferably, the amount is up to 75 wt-%, based on the total weight of the liquid or powderous formulation, of at least one active ingredient. Usually the liquid or powderous formulation comprise at least 0.01 wt.-%, 0.21 wt.-% or 0.5 wt-%, based on the total weight of the powderous formulation, of at least one active ingredient. The content is dependent on the kind of active ingredient (or the mixture of active ingredients) which is used. It could also be higher as well lower.

A very usual range of an amount of the active ingredient in the liquid or powderous formulation is from 0.0001 to 40 wt.-%, from 0.001 to 40 wt.-%, from 0.01 to 40 wt.-%, from 0.1 to 40 wt.-% or from 0.5 - 40 wt-%, based on the total weight of the liquid or powderous formulation.

Another very usual range of an amount of the active ingredient in the liquid or powderous formulation is from 0.0001 to 20 wt.-%, from 0.001 to 20 wt.-%, from 0.01 to 20 wt.-%, from 0.1 to 40 wt.-% or from 0.5 - 20 wt-%, based on the total weight of the liquid or powderous formulation.

Therefore, the present invention relates to compressed tablets (IV) which are compressed tablets (II) or (III), wherein the amount of the at least one active ingredient in the liquid or powderous formulation is up to 75 wt- %, based on the total weight of the liquid or powderous formulation.

Therefore, the present invention relates to compressed tablets (V), which are compressed tablets (II), (III) or (IV), wherein the amount of the at least one active ingredient in the liquid or powderous formulation is at least 0.01 wt.-%, preferably at least 0.1 wt.-%, more preferably at least 0.5 wt-%, based on the total weight of the liquid or powderous formulation.

Therefore, the present invention relates to compressed tablets (VI), which are compressed tablets (II) or (III), wherein the amount of the at least one active ingredient in the liquid or powderous formulation is 0.01 wt-% - 40 wt-%, preferably 0.1 wt-% - 40 wt-%, most preferably 0.5 wt-% - 40 wt-%, based on the total weight of the liquid or powderous formulation.

Therefore, the present invention relates to a to compressed tablets (VII), which are compressed tablets (II) or (III), wherein the amount of the at least one active ingredient in the liquid or powderous formulation is 0.01 wt-% - 20 wt-%, preferably 0.1 wt-% - 20 wt-%, most preferably 0.5 wt-% - 20 wt-%, based on the total weight of the liquid or powderous formulation.

The liquid or powderous formulation used in the compressed tablets according to the present invention can comprise other components which are used to produce such formulations (by dilution, spray drying, spray cooling, spray chilling, granulation, absorption etc), which comprise the active ingredient(s).

The term "powderous formulation" in the context of the present invention always refers to particles, which are produced by any commonly known and used technologies (such as crystallization, spray drying, spray cooling, spray chilling, granulation or absorption on a carrier etc.) and which contains at least one active ingredient as defined above.

The liquid or powderous formulations, which are used according to the present invention can be produced by any commonly known process, which are used to produce such particles (such as crystallization, dilution, spray chilling, spray coating, fluidized bed spray granulation, film coating, absorption etc).

The powderous formulation according to the present invention may also comprise a coating. It is possible to produce the powderous formulation first and then coat them at a later stage or to do both steps in one process (production of the particles and then coat them right away).

The powderous formulation generally consists of the at least one active ingredient in solid form or of the at least one active ingredient and a suitable additive to form such a powderous formulation such as (modified) starch, silica, maltodextrin, limestone, cyclodextrin, wheat as well as mixtures thereof.

Gluten is the protein found in many grains and cereals such as wheat, corn, oats, rye and barley. The term "gluten" as used herein refers to gluten from any available source and to mixtures of gluten from various sources. Preferably, in all embodiments of the present invention wheat gluten, more preferably vital wheat gluten (CAS 93384-22-6) is used. Such vital wheat gluten having a protein content of at least 83 % is e.g. obtainable as Viten® (wheat gluten supra vital) at Roquette or GluVital™ at Cargill.

The amount of gluten in the tablets according to the present invention is preferably at least 40 wt.-%, more preferably at least 50 wt.-%, even more preferably at least 60 wt.-%, and most preferably at least 70 wt.-%, such as at least 80 wt.-%, based on the total weight of the tablet.

Thus, the present invention relates to compressed tablets (VIII) which are tablets (I), (II), (III, (IV), (V), (VI) or (VII), wherein the amount of gluten is at least 40 wt.-%, preferably at least 50 wt.-%, more preferably at least 60 wt.-%, and most preferably at least 70 wt.-%, such as at least 80 wt.-%, based on the total weight of the tablet.

The tablets according to the present invention are compressed powders, which depending on the process of production as well as the storage conditions, may comprise some water. Generally, the moisture content of the tablets according to the present invention is below 12 wt-%. Therefore, a further embodiment of the present invention relates to tablets (IX), which are tablets (I), (II), (III, (IV), (V), (VI), (VII) or (VIII), which have a moisture content of maximum 12 wt.-%, preferably maximum of 10 wt.-%, more preferably maximum 8 wt.-%, most preferably maximum of 6 wt.-%, based on the total weight of the tablets.

The tablets according to the present invention may furthermore contain additional (active) ingredients, excipients, and/or auxiliary agents (in the following referred to as additives) suitable to produce compressed tablets and for human and/ or feed application. Such additives are well known to a person skilled in the art. The amount of these additives in the tablets according to the present invention can vary and depends on the compressed tablets to be produced.

Advantageously, the (total) amount of additive(s) present in the tablets according to the present invention is selected in the range of 1 to 40 wt.-%, preferably in the range of 1 to 30 wt.-%, more preferably in the range of 1 to 20 wt.-% based on the total weight of the tablet.

Thus, in a particular advantageous embodiment, the present invention relates to compressed tablets (X), which are tablets (I), (II), (III, (IV), (V), (VI), (VII), (VIII) or (IX), which further comprise 1 to 40 wt-%, preferably 1 to 30 wt.-%, more preferably 1 to 20 wt.-%, based on the total weight of the compressed tablet, of at least one additive and wherein preferably the ingredients, i.e. the at least one active ingredient, eventually in the form of a liquid or powderous formulation, the gluten, the water and the further additives sum up to 100 wt.-%.

Particularly suitable additives to be used in the tablets according to the present invention encompass fillers, lubricants, proteins, dyes, flavours, sweeteners and antioxidants without being limited thereto.

Particularly suitable fillers according to the present invention encompass mono-, di- and tricalcium phosphate, limestone (calcium carbonate), magnesium carbonate, silicate compounds (magnesium and aluminum silicate), magnesiumoxide, microcrystalline cellulose, proteins, silicium dioxide as well as mixtures thereof, such as more in particular microcrystalline wax, microcrystalline cellulose and limestone as well as mixtures thereof, most preferably microcrystalline cellulose.

If present, the total amount of filler(s) in the tablets according to the present invention is advantageously selected in the range of 0 to 30 wt.-%, preferably in the range of 0 to 20 wt.-%, more preferably in the range of 0 to 15 wt.-% based on the total weight of the compressed tablet.

Thus, in a particular advantageous embodiment, the present invention relates to compressed tablets (XI), which are tablets (X), wherein the at least one additive comprises from 0 to 30 wt.-%, preferably from 0 to 20 wt.-%, more preferably from 0 to 15 wt.-% based on the total weight of the compressed tablet of a filler.

Particularly suitable lubricants according to the present invention are water insoluble lubricants and encompass magnesium stearate, calcium stearate, zinc stearate or stearic acid such as more in particular magnesium stearate and/ or calcium stearate.

If present, the total amount of lubricant(s) in the tablets according to the present invention is advantageously selected in the range of 0.1 to 5 wt.-%, preferably in the range of 0.25 to 3 wt.-%, more preferably in the range of 0.5 to 2 wt.-% based on the total weight of the compressed tablet.

Thus, in a particular advantageous embodiment, the present invention relates to compressed tablets (XII), which are tablets (X) or (XI), wherein the at least one additive (further) comprises from 0.1 to 5 wt.-%, preferably from 0.25 to 3 wt.-%, more preferably from 0.5 to 2 wt.-% based on the total weight of the compressed tablet based of a lubricant.

In a particular advantageous embodiment, the present invention relates to compressed tablets (XIII), consisting essentially of
(i) 0.001 to 30 wt-%, preferably 0.05 to 20 wt.-%, more preferably 0.075 to 15 wt.-%, based on the total weight of the compressed tablet, of an active ingredient selected from the group consisting of water- or fat-soluble vitamins, carotenoids, and feed enzymes as well as mixtures thereof in the form of a powderous formulation, and
(ii) at least 50 wt.-%, preferably at least 60 wt.-%, more preferably at least 70 wt.-%, based on the total weight of the compressed tablet, of gluten, preferably vital wheat gluten, and
(iii) 0 to 5 wt-%, preferably 0.25 to 3 wt.-%, more preferably 0.5 to 2 wt.-%, based on the total weight of the compressed tablet, of a lubricant, wherein preferably the lubricant is selected from calcium stearate and magnesium stearate, and
(iv) 0 to 25 wt.-%, preferably 0 to 20 wt.-%, more preferably from 0 to 10 wt.-%, based on the total weight of the compressed tablet, of at least one filler, wherein the filler is preferably selected from the group consisting of microcrystalline cellulose and limestone as well as mixtures thereof, and
(iii) 0 to 10 wt-%, more preferably 0 to 8 wt.-%, most preferably 0 to 6 wt.-%, based on the total weight of the compressed tablet, of water.

A further suitable compressed tablet according to the present invention (XIV) consists essentially of
(i) 0.075 to 15 wt.-%, based on the total weight of the compressed tablet, of an active ingredient selected from the group consisting of water- or fat-soluble vitamins, carotenoids, and feed enzymes as well as mixtures thereof in the form of a powderous formulation, and
(ii) at least 40 wt.-%, based on the total weight of the compressed tablet, of vital wheat gluten, and
(iii) 0.5 to 2 wt.-%, based on the total weight of the compressed tablet, of a lubricant selected from calcium stearate and magnesium stearate, and
(iv) 0 to 10 wt.-%, based on the total weight of the compressed tablet, of at least one filler selected from the group consisting of microcrystalline cellulose and limestone as well as mixtures thereof, and
(iv) 0 to 6 wt.-%, based on the total weight of the compressed tablet, of water.

The term 'consisting essentially of' as used according to the present invention means that the total amount of the ingredients ideally adds up to 100 wt.-%. It is however not excluded that small amounts of impurities or additives may be present, with the proviso that the total amount of such impurities or additives is preferably less than 3 wt.-%, more preferably less than 2 wt.-%, most preferably less than 1 wt.-% and which are e.g. introduced via the respective raw materials.

The choice of the shape, volume and weight size of the compressed tablets according to the present invention will of course depend on the desired application. The shape of the compressed tablet can for example be sphere like, egg-like. The tablets of the present invention can be in the form of a pellet, a grain, a granule or any other type of particle, in so far it relates to compressed material.

Usually the tablets according to the present invention are several millimetres to several centimetres in size (such as 1 to 3 cm).

The weight of the tablet might vary according to the intended use and can e.g. range from 0.5 g to 2 g.

The tablets according to the present invention can be produced according to standard methods in the art by compressing the admixed ingredients with a pressure of at least 5 KN to 100 kN.

Thus, the present invention also relates to a process for the production of compressed tablets according to the present invention, wherein a mixture consisting essentially of the compound of formula (I), the gluten and the optionally present additive(s) are compressed with a pressure of at least 5 KN, preferably in the range of 20 to 100 kN, more preferably in the range of 50 to 100 kN.

The compressed tablet according to the present invention can additionally be coated with customary coatings in the art such as wax or fats. If present, such coating is generally applied in amounts of 5 to 50 wt.-% based on the total weight of the tablet. Advantageously, the coating comprises at least one wax and/or at least one fat, which has a dropping point of from 30 to 85 °C.

The dropping point of a material as used herein refers to the temperature (in °C) when the material begins to melt under standardized conditions. Thus, the material is heated so long until it changes the state of matter from solid to liquid. The dropping point is the temperature when the first dropping is released from the material. The determination of the dropping point (Tropfpunkt) is carried out as described in the standard norm DIN ISO 2176.

Particularly suitable waxes to be used as coating in the context of the present invention include organic compounds consisting of long alkyl chains, natural waxes (plant, animal) which are typically esters of fatty acids and long chain alcohols as well as synthetic waxes, which are long-chain hydrocarbons lacking functional groups.

Particularly suitable fats to be used as coating in the context of the present invention include a wide group of compounds which are soluble in organic solvents and largely insoluble in water such as hydrogenated fats (or saturated fats) which are generally triesters of glycerol and fatty acids. Suitable fats can have natural or synthetic origin. It is possible to hydrogenate a (poly)unsaturated fat to obtain a hydrogenated (saturated) fat.

Preferred examples of waxes and fats to be used as coating according to the present invention are glycerine monostearate, carnauba wax, candelilla wax, sugarcane wax, palmitic acid, stearic acid hydrogenated cottonseed oil, hydrogenated palm oil and hydrogenated rapeseed oil as well as mixtures thereof.

The tablets according to the present invention may be administered as such or may be admixed with customary food or feed compositions.

The invention is illustrated by the following Examples. All temperatures are given in °C and all parts and percentages are related to the weight.

### Examples

### Tablets with a water soluble or a fat-soluble vitamin

### Preparation of tablets:

5g powder mixture including Form (I), respectively Hy-D or Vitamin B6 was prepared as outlined in table 3 by incorporating the listed ingredients step by step in a 50 ml glass container. The powder mix was mixed using a Bachofen Turbula mixer T2C for 10min at 63rpm then sieved through a 1.25mm sieve then mixed again during 10min at 63rpm. Following mixing as outlined above, the loose powder mixture was compressed using a tablet press Maassen Typ 15 T to produce 1g tablets having a diameter of 13 mm using a compression force of 10 tons.

### Release study:

The respective tablets were then placed in a beaker with 100 ml of demineralised water at 39°C. Each experiment was done in duplicate. After 5, 15, 30, 60, 90 minutes and 2, 6 and 24 hours 1ml solution was taken out of the beaker and analysed for its 3HyD respectively Vitamin B6 content (HPLC). Time of 50% release is given in Table 3 (calculated by mathematical extrapolation of the obtained data points).

**Table 3**

| # | Ingredient | I1 | I2 | I3 | I4 |
|---|---|---|---|---|---|
| 2 | Rovimix™ HyD (contains 1.25% 25-hydroxyvitamin D3) | 10 | 20 | | |
| 3 | Rovimix B6 (100% active, powderous form) | | | 0.2 | 1 |
| 4 | Calciumstearate | 1 | 1 | 1 | 1 |
| 5 | Vital wheat Gluten | 89 | 79 | 98.8 | 98 |
| Release after [h] | | 15 | 15 | 6 | 5.5 |

| | | | | | |
|---|---|---|---|---|---|
| 1) Form prepared as outlined in example 1 2) Rovimix™ HyD 1.25% / DSM Nutritional Products Ltd 3) Rovimix™ B6 / DSM Nutritional Products Ltd 4) Calcium stearate / Riebel-de Haën 5) Vitene®/ Roquette | | | | | |

## Claims

1. A compressed tablet comprising
(i) at least one active ingredient selected from the group consisting of water- or fat-soluble vitamins, carotenoids, and feed enzymes as well as mixtures thereof, and
(ii) at least 30 wt.-%, based on the total weight of the compressed tablet, of gluten.

2. The compressed tablet according to claim 1, wherein the active is in the form of a powderous formulation.

3. The compressed tablet according to claim 1 or 2, comprising at least 40 wt.-%, more preferably at least 50%, even more preferably at least 60 wt.-% and most preferably at least 70 wt.-% based on the total weight of the compressed tablet, of gluten.

4. The compressed tablet according to any of the preceding claims, wherein the total amount of active ingredients is selected in the range of 1 ppb to 50 wt.-%, based on the total weight of the tablet of an active.

5. The compressed tablet according to any of the preceding claims, wherein the gluten is wheat gluten, preferably vital wheat gluten.

6. The compressed tablet according to any of the preceding claims, wherein the at least one active ingredient is selected from the group consisting of water or fat soluble vitamins and carotenoids as well as mixtures thereof.

7. The compressed tablet according to any of the preceding claims, wherein the at least one active ingredient is selected from the group consisting of vitamin A, D, E, and K as well as derivatives thereof and/ or B-vitamins and/ or vitamin C and/ or and carotenoids such as a-carotene, β-carotene, 8'-apo-carotenal, 8'-apo-carotenoic acid esters, canthaxanthin, astaxanthin, lycopene, lutein, zeaxanthin.

8. The compressed tablet according to any of the preceding claims wherein the at least one active ingredient is selected from the group consisting of Vitamin D and derivatives thereof, Vitamin B6 and derivatives thereof, preferably from Hy-D and Vitamin B6, most preferably Vitamin B6.

9. The compressed tablet according to any of the preceding claims further comprising at least one additive in an amount selected in the range of 1 to 40 wt.-%, preferably in the range of 1 to 30 wt.-%, more preferably in the range of 1 to 20 wt.-% based on the total weight of the tablet.

10. A compressed tablet according to any of the preceding claims wherein the additive is selected from the group consisting of fillers, lubricants, proteins, dyes, flavours, sweeteners and antioxidants.

11. A compressed tablet according to any of the preceding claims consisting essentially of
(i) 0.001 to 30 wt-%, preferably 0.05 to 20 wt.-%, more preferably 0.075 to 15 wt.-%, based on the total weight of the compressed tablet, of the active in the form of a powderous formulation, and
(ii) at least 50 wt.-%, preferably at least 60 wt.-%, more preferably at least 70 wt.-%, based on the total weight of the compressed tablet, of gluten, preferably vital wheat gluten, and
(iii) 0 to 5 wt-%, preferably 0.25 to 3 wt.-%, more preferably 0.5 to 2 wt.-%, based on the total weight of the compressed tablet, of a lubricant, wherein preferably the lubricant is selected from calcium stearate and magnesium stearate, and
(iv) 0 to 25 wt.-%, preferably 0 to 20 wt.-%, more preferably from 0 to 10 wt.-%, based on the total weight of the compressed tablet, of at least one filler, wherein the filler is preferably selected from the group consisting of microcrystalline cellulose and limestone as well as mixtures thereof, and
(v) 0 to 10 wt-%, more preferably 0 to 8 wt.-%, most preferably 0 to 6 wt.-%, based on the total weight of the compressed tablet, of water.

12. The compressed tablet according to any of the preceding claims, wherein the tablet contains an additional coating.

13. The compressed tablet according to claim 12, wherein the coating is selected from the group consisting of glycerine monostearate, carnauba wax, candelilla wax, sugarcane wax, palmitic acid, stearic acid hydrogenated cottonseed oil, hydrogenated palm oil and hydrogenated rapeseed oil as well as mixtures thereof.

14. A process for the preparation of a compressed tablet according to anyone of claims 1 to 13, which process comprises admixing the ingredients and compressing the ingredients at a pressure of at least 5 KN.

15. Use of a tablet according to any one of the preceding claims as feed additive.
